# EUROPÄISCHE PATENTSCHRIFT

(11) **EP 3 213 156 B1**
(45) Veröffentlichungstag und Bekanntmachung des Hinweises auf die Patenterteilung: **19.09.2018**
(21) Anmeldenummer: 15802052.9
(22) Anmeldetag: 26.11.2015
(51) Int. Cl.: G05B 15/02, G06F 21/62

(54) **SICHERE ÜBERMITTLUNG VON SENSIBLEN MESSDATEN IN EINEM AUTOMATISIERUNGSNETZWERK**
SECURE TRANSMISSION OF SENSITIVE MEASURED DATA IN AN AUTOMATION NETWORK
TRANSMISSION SÛRE DE DONNÉES DE MESURES SENSIBLES DANS UN RÉSEAU D'AUTOMATISATION

(30) Priorität: 09.01.2015 DE 102015200210
(43) Veröffentlichungstag der Anmeldung: 06.09.2017
(73) Patentinhaber: Siemens Aktiengesellschaft, 80333 München (DE)
(72) Erfinder: NIEDERMEIER, Christoph, 80999 München (DE); VICARI, Norbert, 81827 München (DE)
(86) Internationale Anmeldenummer: PCT/EP2015/077741
(87) Internationale Veröffentlichungsnummer: WO 2016/110361

(56) Entgegenhaltungen:
- WO-A1-2007/075105
- US-A1- 2013 083 805

## Beschreibung

Die vorliegende Erfindung betrifft ein Verfahren zur Regelung eines Automatisierungsnetzes mit einer Vielzahl von Messdaten-Produzenten durch zumindest einen zentralen Konsumenten auf Basis von dezentral erfassten Messdaten, die sicherheitskritische Datensätze umfassen.

Bei dem Automatisierungsnetz kann es sich unter anderem um ein Gebäudeautomatisierungsnetz handeln. Um z.B. die unterschiedlichen Feldgeräte (Aktoren, Schalter, Steuergeräte oder andere Netzbetriebsmittel) in dem Automatisierungsnetz optimiert einsetzen und einen effizienten und zuverlässigen Systembetrieb gewährleisten zu können, ist es erforderlich, permanent Zustandsinformationen (z.B. in der Form von Lastflussdaten) als Messdaten dezentral, z.B. in den einzelnen Gebäuden oder angeschlossenen Verbraucherorten, zu erfassen, diese mit unterschiedlichen Methoden zu bearbeiten, um dann ein Analyseergebnis - vorzugweise an den Netzbetreiber bzw. den Versorger - bereitstellen zu können.

Die dezentral erfassten Messwerte und Betriebsdaten sind für den oder die Datenkonsumenten relevant, damit er/sie geeignete Analysemethoden anwenden kann/können, um z.B. Optimierungsprozesse anstoßen oder zukünftige Verbräuche besser planen zu können.

Bei der Messung von Sensordaten, aus denen Netzzustandsinformationen und Lastflussdaten ermittelt werden, fallen vertrauliche Daten an, die nur zugriffsgeschützt an autorisierte Empfänger übermittelt werden dürfen.

In Gebäudeautomatisierungssystemen nach dem Stand der Technik wurde dies dadurch gelöst, dass ausschließlich ein Konfigurator des Systems sowie der Besitzer des Gebäudes überhaupt Zugriff auf die sensiblen Daten hatte. Der Zugriff war somit aus sicherheitstechnischen Gründen nur lokal (beim Energieverbraucher) möglich. Damit waren die Analysemöglichkeiten für den zentralen Versorger, wenn überhaupt, dann nur sehr eingeschränkt möglich.

Aus der US 2013/0083805 A1 ist ein Netzwerkintegrationssystem inklusive ein Netzwerkintegrationsverfahren bekannt, das eine Computernetzwerkfunktionalität in einer koordinierten und/oder konzertierten Weise in Netzwerkkonfigurationen von lokalen und/oder übergreifenden Netzwerk-Gateway-Routern ermöglicht. Das System nutzt dabei eine als Smart-Gateway-Power-Controller (SGPC) ausgebildete Einrichtung, die innerhalb eines Heimautomationsnetzes (Home Automation Network; HAN) interagiert, damit das lokale Heimautomationsnetz als eigenes Netzwerk betrieben werden kann, aber dennoch Zugriff entweder auf ein externes Netzwerk, wie zum Beispiel das Internet, oder von diesem externen Netzwerk auf das Heimnetzwerk ermöglicht. Das System erlaubt die Vernetzung von Heimautomationsnetzwerkgeräten inklusive der SPGC-Einrichtung und die Interaktion der Geräte als Gruppe innerhalb eines Mensch-Maschine-basierten "sozialen Netzwerks", wo Informationen wie bei einem herkömmlichen sozialen Netzwerk nach dem Push/Pull-Prinzip übertragen werden. Das System ermöglicht zudem das Einstellen/das Bedienen/das Überwachen des Heimautomationsnetzwerkgerätes. Dazu hosted das Heimautomationsnetzwerkgerät eine Vielzahl von Benutzerschnittstellen, die dabei lokal oder extern von Web-Schnittstellen und/oder Web-Netzwerken unterstützt werden. Die Benutzerschnittstellen ihrerseits unterstützen lokale Zugriffsgeräte und/oder Fernzugriffsgeräte,wie z.B. zellulare Mobiltelefone, Tablet-Computer, Laptops, Desktop-Computer etc.

Der vorliegenden Erfindung liegt die Aufgabe zugrunde, dem Datenkonsumenten ein Analyseergebnis bereitstellen zu können, ohne dass sicherheitskritische Daten von den jeweiligen Netzwerkknoten, auf denen die Daten gemessen werden, an den oder die Datenkonsumenten übermittelt werden müssen.

Diese Aufgabe wird jeweils durch einen Gegenstand nach den unabhängigen, nebengeordneten Ansprüchen gelöst. Vorteilhafte Ausführungsformen sind Gegenstand der abhängigen Ansprüche, der Beschreibung und der Zeichnungen.

Gemäß einem ersten Aspekt wird die Aufgabe durch ein Verfahren gelöst, das zum Regeln eines Automatisierungsnetzes seitens zumindest eines zentralen Konsumenten angewendet werden kann. Das Automatisierungsnetz kann als Gebäudeautomatisierungsnetz oder als Energieübertragungs- und Verteilungsnetz ausgebildet sein und umfasst eine Vielzahl von dezentralen Produzenten, auf denen jeweils Messdaten erfasst werden, die zugriffsgeschützt verarbeitet werden müssen, da sie sensible oder sicherheitskritische Datensätze umfassen. Die Regelung basiert auf einem Analyseergebnis, das wiederum aus den erfassten Messdaten berechnet wird. In einer Ausführungsform der Erfindung sind die Produzenten als dezentrale, über Feldbussysteme in Datenaustausch stehende Geräte, Sensoren und/oder Aktoren in einem Gebäudeautomatisierungsnetz und der Konsument (oder die Konsumenten) als außerhalb des Gebäudeautomatisierungsnetzes befindlicher Datenkonsument ausgebildet. Das Verfahren umfasst folgende Verfahrensschritte, die auf Produzentenseite ausgeführt werden:
- Messen oder Bereitstellen der Messdaten von einer Vielzahl von Sensoren und Klassifizieren der Messdaten in Sicherheitsstufen
- Prüfen einer Zulässigkeit von konsumenten-generierten Verarbeitungsbefehlen in Abhängigkeit von der jeweils klassifizierten Sicherheitsstufe und im Fall einer positiven Prüfung:
- Verarbeiten der Messdaten auf Basis der als zulässig geprüften Verarbeitungsbefehle zum Erzeugen eines Analyseergebnisdatensatzes
- Übermitteln des Analyseergebnisdatensatzes an den Konsumenten. Der Analyseergebnisdatensatz kann zur Regelung oder zur Bedarfsvorhersage des Automatisierungsnetzes verwendet werden.

Bei dem Verfahren wird sichergestellt, dass die vertraulichen Messdaten eine Umgebung des jeweiligen lokalen Produzenten (also des Energieverbrauchers, wie z.B. einer Produktionsanlage oder einem Haushalt oder weiteren Energieverbrauchern) nicht verlassen. Es wird ausschließlich der Analyseergebnisdatensatz kommuniziert, der keine sensiblen Daten mehr umfasst, der aber alle notwendigen Informationen für die Regelung des Netzwerkes enthält. Dieser Vertraulichkeitsaspekt ist deshalb wichtig, da aus den lokalen und vor Ort erfassten Messdaten ein Rückschluss auf die Funktions- und Betriebsweise der Anlage oder auf das Verhalten und die Gewohnheiten des Energieverbrauchers gezogen werden kann, was mit den datenschutzrechtlichen Aspekten zum Schutz des Energiekonsumenten (und Datenproduzenten) nicht vereinbar ist. Gemäß einem Aspekt kennzeichnet sich das Verfahren dadurch, dass ein Analyseergebnis bzw. ein Analyseergebnisdatensatz auf dem oder für den Konsumenten (z.B. auf einem Gerät des Automatisierungsnetzes oder Netzwerkbetreiber) bereitgestellt werden kann, ohne dass die sicherheitskritischen Messdaten die Umgebung des jeweiligen Datenproduzenten verlassen. Welche Datensätze und Messdaten als sicherheitskritisch und sensibel klassifiziert werden, kann in einer Konfigurationsphase des Verfahrens, die dem eigentlichen Regelungsverfahren vorgeschaltet ist, definiert werden. Hierzu zählen z.B. Präsenzmessdaten, die beispielsweise über Ultraschallsensoren, die Anwesenheit einer Person im Raum erfassen und Personaldaten. Weitere Beispiele von Messdaten, sind Messdaten die von Sensoren zur Erfassung der Luftqualität in einem Raum (etwa von CO2-Sensor) erfasst werden. Aus diesen Messdaten kann beispielsweise rückgeschlossen werden, ob und wie viele Personen sich wie lange in einem Raum befinden. Deshalb werden sie regelmässig als sicherheitskritisch eingestuft. Ein weiteres Beispiel ist die Erfassung des zeitlichen Verlaufs des Stromverbrauchs (von einem zeitlich fein auflösenden Strommessgerät). Aus diesen Messdaten können die täglichen Gewohnheiten von Bewohnern (etwa übliche An- und Abwesenheiten) abgelesen werden; deshalb werden sie als sicherheitskritisch eingestuft und dürfen nicht das Netzwerk des Datenproduzenten verlassen und können damit auch nicht auf dem Konsumenten bereitgestellt werden ohne ein hohes Sicherheitsrisiko zu darzustellen.

Das Automatisierungsnetz kann ein Gebäudeautomatisierungsnetz sein, das aus einer Vielzahl von dezentralen elektronischen Feldgeräten besteht, die über ein Bussystem (insbesondere Feldbussystem) oder ein (Kommunikations-) Netzwerk Daten austauschen. Die Feldgeräte umfassen eine Vielzahl von Aktoren und Sensoren, auf denen Messdaten erfasst werden. Die Messdaten können der Netzüberwachung dienen und für Netzqualitätsaufzeichnung und Störschreibung verwendet werden. Die präzise Messung, Erfassung und Meldung notwendiger Informationen kann erfindungsgemäß für die kontinuierliche Bestimmung, Anpassung und Verbesserung der Netzqualität eingesetzt werden. Dabei ist es wichtig, dass die Produzenten unterschiedlichen Gebäudegewerken angehören können, so etwa der Klimatisierung, Beleuchtung, Beschattung, Belüftung und Zutrittskontrollsystemen. Vorteilhafterweise können diese Daten dennoch zentral verrechnet werden. Die messdatenproduzierenden Produzenten können darüber hinaus Bedienelemente, Verbraucher, Schaltschränke und andere technische Einheiten (im Gebäude oder im Netzwerk) umfassen. In diesem Ausführungsbeispiel ist der Konsument eine dritte Instanz, die sich außerhalb des Produzenten bzw. außerhalb des Produzentennetzwerkes befindet. Dabei kann es sich um Instanzen handeln, die Dienste für den oder die Produzenten oder für Dritte anbieten. Der Konsument kann ein Energieversorger, ein Smart Grid Provider oder ein Netzbetreiber sein. Die Dienste umfassen eine Messdatenanalyse zur Steuerung, Regelung und/ oder Optimierung des Automatisierungsnetzes.

Das Automatisierungsnetz kann auch ein Stromnetz sein und Produktionsanlagen, Zusammenschlüsse von Verbrauchern, aber auch einzelne Verbraucher, wie Wärmepumpen, Warmwasserspeicher, Tiefkühler, Autobatterien umfassen.

Gemäß einer Ausbildung der Erfindung ist nicht nur ein zentraler Datenkonsument, wie z.B. ein zentraler Energieversorger, ausgebildet, sondern eine beliebige Anzahl von Datenkonsumenten. Die erfassten Messdaten werden auf dem Produzenten zu einem oder mehreren Analyseergebnissen verarbeitet, der bzw. die dann an die Konsumenten weitergeleitet werden, so dass diese unterschiedliche (konfigurierbare) Mehrwertdiensten für Gebäude (Value-Added Services) realisieren können, indem für den Betreiber des Gebäudes z.B. bestimmte Energienutzungen oder Lastverschiebungen im Gebäude als Regelungsdatensatz vorgeschlagen werden können, um die Abstimmung zwischen Versorger und Verbraucher zu optimieren. Dabei können die unterschiedlichen Datenkonsumenten unterschiedliche Rollen annehmen. Mit anderen Worten kann jeweils ein Datenkonsument unterschiedliche Rollen in Bezug auf die Auswertung und Analyse der Messdaten annehmen.

Gemäß einem Aspekt der Erfindung ist es vorgesehen, dass mehrere Konsumenten bereitgestellt werden, die von den diversen Produzenten jeweils individuell mit entsprechenden Rechten (insbesondere Zugriffsrechten auf die Messdaten oder auf Sicherheitsstufen der Messdaten) ausgestattet werden. Falls gewünscht, können diese Konsumenten auch spezifische, individuell angepasste Angebote an Analyseprimitiven erhalten. Die verschiedenen Konsumenten können auf Basis der erhaltenen Daten Mehrwertdienste anbieten, die die erhaltenen Daten verarbeiten und ihrerseits wieder Daten liefern, so dass die Konsumenten ihrerseits als Produzenten auftreten.

Das erfindungsgemäße Verfahren kann in einer bevorzugten Ausbildungsvariante der Erfindung ausschließlich auf dem Produzenten oder im Einflussbereich des Produzenten ausgeführt werden. In diesem Fall muss der Konsument nur über eine entsprechende Schnittstelle zur Datenkommunikation verfügen.

Das Netzwerk zur Datenübertragung (insbesondere zwischen Produzent und Konsument) ist vorzugweise ein anderes Netz als das Automatisierungsnetz oder Energieversorgungsnetzwerk und kann als kabelgebundenes und/oder drahtloses Telekommunikationsnetz, Mobilfunknetz, WLAN oder LAN oder als anderes Netzwerk zur digitalen Datenkommunikation betrieben werden. Es kann als öffentliches Netzwerk ausgebildet sein. Innerhalb einer Umgebung des Produzenten können Daten und insbesondere Messdaten ohne Sicherheitsrisiko ausgetauscht und verarbeitet werden. Sobald die Daten aber die Umgebung des Produzenten verlassen, z.B. wenn sie an den Konsumenten übertragen werden sollen, müssen Sicherheits- und Zugriffsschutzaspekte berücksichtigt werden. Erfindungsgemäß ist es deshalb sichergestellt, dass die sicherheitskritischen Messdaten die Umgebung des Produzenten nicht verlassen. In einer Weiterbildung der Erfindung können auch mehrere Produzenten zu einem umfassenderen Produzentennetzwerk zusammengeschlossen sein (z.B. innerhalb eines Gebäudes).

In einer anderen Ausführungsform der Erfindung umfasst das Verfahren produzentenseitige und konsumentenseitige Prozeduren, wobei aber die Datenanalyse stets produzentenseitig ausgeführt wird, so dass sichergestellt ist, dass die Messdaten oder Rohdaten die Domäne des Produzenten nicht verlassen. Die konsumentenseitigen Prozeduren können beispielsweise die Betriebsweise der Datenübertragung (PUSH- oder PULL-Prinzip), zeitbezogenen Vereinbarungen (wann sollen Messdaten angefordert werden), ein regelbasiertes System zur Erzeugung von Verarbeitungsbefehlen aus einer Menge von Analyseprimitiven oder weitere Konfigurationsregeln umfassen.

Die Messdaten werden über Sensoren erfasst und beziehen sich auf physikalische Parameter, die im Rahmen der Energieversorgung des Energiekonsumenten lokal anfallen oder für die Auswertung der Energieeffizienz relevant sind. In einer weiteren, bevorzugten Ausführungsform der Erfindung betreffen die Messdaten unterschiedliche Netzbetriebsmittel oder Parameter. Im Bereich einer Gebäudeautomatisierung können die Sensoren insbesondere folgende Parameter betreffen:
- Raumtemperatur
- Luftqualität z.B. Gehalt an CO2, CO, O2, oder weiterer Gase
- Präsenzsensor (zur Erfassung der Anwesenheit einer Person im Raum, z.B. Infrarotsensor)
- Sensoren, die den Öffnungszustand von Fenstern und Türen anzeigen
- Betriebszeit und Energieverbrauch von Licht, Klimaanlagen, Heizungen, Lüftungen, Kühlanlagen, Waschmaschinen und/oder anderen Energieverbrauchern
- Betriebszeit und Stromerzeugung von Photovoltaikanlagen, Kraft-Wärmekopplungsanlagen
- Planungsdaten aus Kalendern, Belegungsplänen
- Raumnutzungsdaten durch Korrelation von Präsenzdaten und Belegungsplänen.

In einer vorteilhaften Ausführungsform des Verfahrens werden die Messdaten auf unterschiedlichen Produzenten erfasst. Die Erfassung der Messdaten erfolgt üblicherweise grundsätzlich dezentral. Das Analyseergebnis soll zentral in elektronischer Form auf Seite des Automatisierungsnetzbetreibers und Energieversorgers bereitgestellt werden.

Gemäß einem Aspekt der Erfindung weist der Analyseergebnisdatensatz eine geringere Sicherheitsstufe auf als die jeweils verarbeiteten Messdaten. Eine Sicherheitsstufe kennzeichnet sich durch den Umfang der jeweils erforderlichen Zugriffschutz- und Autorisierungsmaßnahmen. Eine geringere Sicherheitsstufe kann somit bedeuten, dass die Daten weniger sicherheitskritisch sind. Die Messdaten erlauben in der Regel direkt oder indirekt (durch weitere Verarbeitungsschritte) einen Rückschluss auf sensible Daten, die vor einem unberechtigten Zugriff zu schützen sind. So handelt es sich beispielsweise bei dem Messdatensatz in Bezug auf die Präsenzmessung um ein sicherheitskritisches Datum. Es wird mit der erfindungsgemäßen Lösung sichergestellt, dass kein unautorisierter Zugriff auf die Information möglich ist, wann sich z.B. eine Person in einem bestimmten Raum oder Gebäudetrakt befindet. Auch bei der Verknüpfung von Messdatensätzen unterschiedlicher Sensoren können sicherheitskritische Datensätzen entstehen. Werden z.B. die Sensordaten von Raumbelegungsplänen mit den Sensordaten von Anwesenheits- oder Präsenzdaten verknüpft, so entsteht regelmäßig ein sensibler Datensatz, der unter Umständen eine Rückschluss auf die in diesem Raum arbeitende Person zulässt, was mit einem Persönlichkeitsschutz und arbeitsschutzrechtlichen Bestimmungen nicht vereinbar ist. Dementsprechend muss sichergestellt sein, dass dieser Datensatz die Sicherheitsdomäne des Produzenten nicht verlässt. Erschwerend ist zu berücksichtigen, dass ein sicherheitskritisches Datum auch dann entstehen kann, wenn zwei oder mehrere an sich nicht sicherheitskritische Datensätze verknüpft oder verrechnet werden. Aus diesem Grund stellt die erfindungsgemäße Lösung sicher, dass keiner der erfassten Messdatensätze die Domäne des Datenproduzenten verlässt.

In einer vorteilhaften Weiterbildung der Erfindung werden Analyseprimitive erzeugt. Die Analyseprimitive dienen zur Konfiguration der Datenauswertung bzw. -Analyse. Die Analyseprimitive können in der Art von Bausteinen bereitgestellt werden, vorzugweise auf Seite des Datenkonsumenten, um konkrete Verarbeitungsbefehle für die Datenanalyse zu bestimmen. Hierbei ist es erfindungsgemäß vorgesehen, dass die jeweilige Sicherheitsstufe für die zu verarbeitenden Daten berücksichtigt wird. Mit anderen Worten ist es automatisch gewährleistet, dass der jeweilige Konsument auch nur die Bausteine oder Analyseprimitive auswählen kann, für die er eine Berechtigung hat. Gemäß einer Ausführungsform der Erfindung ist es vorgesehen, dass jeweils ein Produzent für jeden "seiner" Konsumenten (also für jeden Konsumenten, der seine Analyseergebnisse empfängt) die Analyseprimitive individuell bestimmt.

In einer bevorzugten Ausführungsform der Erfindung können die Rollen als Produzent und Konsument je nach Anwendung adaptiv zugewiesen werden.

Um die jeweilige Berechtigung eines Konsumenten zu berechnen, ist in einer vorteilhaften Weiterbildung der Erfindung ein regelbasiertes System auf dem Konsumenten vorgesehen, das dazu bestimmt ist, auf Basis der jeweiligen Sicherheitsstufe der zugrundeliegenden Messdaten eine Berechtigung für den Konsumenten zu berechnen. Damit werden auf dem Konsumenten nur diejenigen Analyseprimitive zur Auswahl bereitgestellt, die bei der klassifizierten Sicherheitsstufe der Messdaten für ihn auch zulässig aktivierbar sind. Vorzugsweise ist es vorgesehen, die Berechtigungen auf der Seite des Produzenten zu berechnen.

In einer vorteilhaften Weiterbildung der Erfindung umfasst das Verfahren eine Verfügbarkeitsanfrage. Dazu können insbesondere folgende Verfahrensschritte vorgesehen sein:
- Erzeugen einer Verfügbarkeitsanfrage auf dem Konsumenten oder auf einem Knoten, der dem Konsumenten zugeordnet ist
- Übermitteln der Verfügbarkeitsanfrage für Analysedaten des Konsumenten an den Produzenten und
- Übermitteln einer Verfügbarkeitsnachricht als Antwort auf die Verfügbarkeitsanfrage von dem Produzenten an den Konsumenten, mit der Information, ob die angefragten Daten vorhanden sind oder bereitgestellt werden können.

Das vorstehend beschriebene Vorgehen kann auch als PULL-Prinzip beschrieben werden, bei dem die Anfrageaktivität vom Konsumenten der Daten ausgeht und von diesem initiiert wird.

Alternativ kann auch ein PUSH-Prinzip zur Anwendung kommen, bei dem der Datenproduzent den Datenaustausch initiiert und dem Konsumenten mitteilt, dass verwertbare Messdaten seitens zumindest eines Datenproduzenten vorhanden sind. Hier kann zudem fakultativ auch ein Spooling zur Anwendung kommen, bei dem eine Meldung an den Konsumenten erst dann erzeugt wird, wenn eine vorbestimmbare Mindestmenge an Messdaten vorliegt oder wenn Messdaten von vorbestimmten Sensoren vorhanden sind. Damit kann das Datenaustauschverfahren effizienter gestaltet und die Übertragungsbrandbreite des Netzwerkes kann weniger beansprucht werden.

In einer bevorzugten Ausführungsform der Erfindung ist es vorgesehen, dass die Analyseprimitive fallspezifisch erzeugt werden, insbesondere für jede Analyse oder Verfügbarkeitsanfrage spezifisch erzeugt werden. Damit ist der technische Vorteil verbunden, dass der Konsument auch nur die Analyseprimitive auswählen oder bedienen kann, die ihm aufgrund seiner Berechtigung zur Verfügung stehen. Somit werden dem Konsumenten keine Analyseprimitive angeboten, auf die er aufgrund seiner Berechtigung oder der zugrundeliegenden Daten nicht zugreifen darf. Damit kann vermieden werden, dass er Bausteine anwählt und eine Konfiguration erstellt, für die er dann am Ende den Hinweis erhält "permission denied". Damit kann das Analyseverfahren effizienter ausgebildet werden.

In einer weiteren, bevorzugten Ausführungsform der Erfindung werden die Messdaten auf unterschiedlichen Produzenten erfasst und auf einem dedizierten Produzentenknoten verarbeitet. Damit kann die Effizienzanalyse zur Regelung des Automatisierungsnetzes flexibler ausgebildet werden. Aus der Menge der Produzentenknoten kann einer aus dieser Menge als dedizierter Produzentenknoten bestimmt werden, auf dem die Berechnungen zur Kommunikation mit dem Datenkonsumenten ausgeführt werden. Alternativ kann ein gesonderter oder dedizierter Knoten im Netzwerk zur Übernahme dieser Funktion bereitgestellt werden. Auf diesem Knoten ist dann vorzugsweise ein Softwaremodul ausgebildet, das dazu bestimmt ist, die produzentenseitigen Schritte des Verfahrens auszuführen. Der Analyseergebnisdatensatz wird dann über ein Kommunikationsnetzwerk an den Konsumenten übermittelt. Dieser muss dann lediglich mit einer Schnittstelle zum Empfang dieses Datensatzes ausgebildet sein.

In einer weiteren, bevorzugten Ausführungsform der Erfindung werden die Verarbeitungsbefehle zur Analyse der Messdaten seitens des Konsumenten generiert und an den Produzenten übermittelt. Gemäß einer Weiterbildung der Erfindung ist es vorgesehen, dass die Erzeugung der Verarbeitungsbefehle durch das Bereitstellen von Analyseprimitiven in der Art eines Baukastensystems unterstützt wird. Der Anwender auf der Seite des Konsumenten muss dann nur die Primitive, die ihm angeboten werden, auswählen, um eine bestimmte Analysefunktion zu bestimmen. Dabei werden ihm vorzugsweise nur die Primitive angeboten, für die er in Hinblick auf die zugrundeliegenden Messdaten eine Zugriffsberechtigung hat. Die Zugriffsberechtigung kann ferner oder alternativ auch davon abhängig gemacht werden, welchem Typ von Konsument er ist. Dazu können Konsumenten in bestimmte Klassen eingeteilt werden. Die Klasse bestimmt dann die Art der Analysefunktionen, die zulässig ausgeführt werden können.

In einer weiteren, bevorzugten Ausführungsform der Erfindung umfasst die Verarbeitung der Messdaten eine Anwendung von statistischen und mathematischen Operatoren, wie Mittelwertbildungen, Faltungen, Summationen, Histogramm-basierte Verfahren oder Korrelationen. Die Operatoren können durch Softwarefunktionen ausgeführt werden.

In einer weiteren, bevorzugten Ausführungsform der Erfindung werden die Verarbeitungsbefehle zur Verarbeitung der Messdaten mit einem regelbasierten System erzeugt. Das regelbasierte System kann unabhängig von einem System auf dem Produzenten konfiguriert werden und insbesondere unabhängig von einer Erzeugungseinheit für die Analyseprimitive. Damit können auch spezifische Vorgaben seitens des Konsumenten (z.B. was das Zielformat, die Anzahl der Meldungen, den Zeitrahmen für die Lieferung von Analyseergebnissen etc. angeht) unabhängig von dem Betrieb des Datenproduzenten geändert oder hinzugefügt oder gelöscht werden, was die Flexibilität erhöht.

Vorstehend wurde die Lösung der Aufgabe anhand des Verfahrens beschriebenen. Dabei erwähnte Merkmale, Vorteile oder alternative Ausführungsformen sind ebenso auch auf die anderen beanspruchten Gegenstände zu übertragen und umgekehrt. Mit anderen Worten können auch die gegenständlichen Ansprüche (die beispielsweise auf ein System oder auf ein Computerprogrammprodukt gerichtet sind) mit den Merkmalen weitergebildet sein, die in Zusammenhang mit dem Verfahren beschrieben oder beansprucht sind. Die entsprechenden funktionalen Merkmale des Verfahrens werden dabei durch entsprechende gegenständliche Module, insbesondere durch Hardware-Module oder Mikroprozessor-Module, des Systems bzw. des Produktes ausgebildet und umgekehrt.

Gemäß einem weiteren Aspekt betrifft die Erfindung ein Netzwerksystem zur Regelung eines Automatisierungsnetzes und zur Kommunikation von vertraulichen Messdaten zwischen einem oder mehreren dezentralen, Messdaten erzeugenden Produzenten und zumindest einem Konsumenten, mit:
- Einer Vielzahl von Sensoren, die auf Seite des Produzenten zur Bereitstellung von Messdaten bestimmt sind
- Einer Klassifikationseinheit, die zum Klassifizieren der Messdaten in Sicherheitsstufen bestimmt ist
- Einer Prüfeinheit, die zum Prüfen einer Zulässigkeit von konsumenten-generierten Verarbeitungsbefehlen in Abhängigkeit von der jeweils klassifizierten Sicherheitsstufe bestimmt ist
- Einem Prozessor, der zum Verarbeiten der Messdaten auf Basis der als zulässig geprüften Verarbeitungsbefehle zum Erzeugen eines Analyseergebnisdatensatzes bestimmt ist und auf Seite des Produzenten bereitgestellt wird
- Einem Netzwerk zum Übermitteln des Analyseergebnisdatensatzes an den Konsumenten zur Regelung des Automatisierungsnetzes.

Gemäß einer bevorzugten Ausführungsform der Erfindung ist die Prüfeinheit des Netzwerksystems auf Seite des Produzenten bereitgestellt. Alternativ kann sie auch auf Seite des Konsumenten ausgebildet sein oder die Prüfeinheit umfasst zwei Module, die sowohl produzentenseitig als auch konsumentenseitig angeordnet sind.

Eine weitere Aufgabenlösung besteht in einem Computerprogrammprodukt, das in einen Speicher eines Computers geladen oder ladbar ist mit Computerprogrammcode zur Durchführung des oben näher beschriebenen Verfahrens, wenn das Computerprogrammprodukt auf dem Computer ausgeführt wird.

Eine weitere Aufgabenlösung sieht ein Computerprogramm vor, mit Computerprogrammcode zur Durchführung aller Verfahrensschritte des oben näher beschriebenen Verfahrens, wenn das Computerprogramm auf einem Computer ausgeführt wird. Dabei ist es auch möglich, dass das Computerprogramm auf einem von einem Computer lesbaren Medium gespeichert ist.

In der folgenden detaillierten Figurenbeschreibung werden nicht einschränkend zu verstehende Ausführungsbeispiele mit deren Merkmalen und weiteren Vorteilen anhand der Zeichnung besprochen. In dieser zeigen:
- Fig. 1: ein Blockschaltbild eines Analysesystems zur Messdaten eines Energieversorgungsnetzwerkes gemäß einer bevorzugten Ausführungsform der Erfindung;
- Fig. 2: ein Kommunikationsdiagramm zwischen Datenproduzent und Datenkonsument gemäß einer bevorzugten Ausführungsform der Erfindung;
- Fig. 3: ein Kommunikationsdiagramm zwischen Datenproduzent und Datenkonsument gemäß einer weiteren Ausführungsform der Erfindung;
- Fig. 4: ein Kommunikationsdiagramm zwischen Datenproduzent und Datenkonsument gemäß einer weiteren Ausführungsform der Erfindung;
- Fig. 5: ein Blockschaltbild eines Netzwerksystems gemäß einer Ausführungsform der Erfindung und
- Fig. 6: ein Blockschaltbild eines Datenproduzenten gemäß einer bevorzugten Ausführungsform der Erfindung.

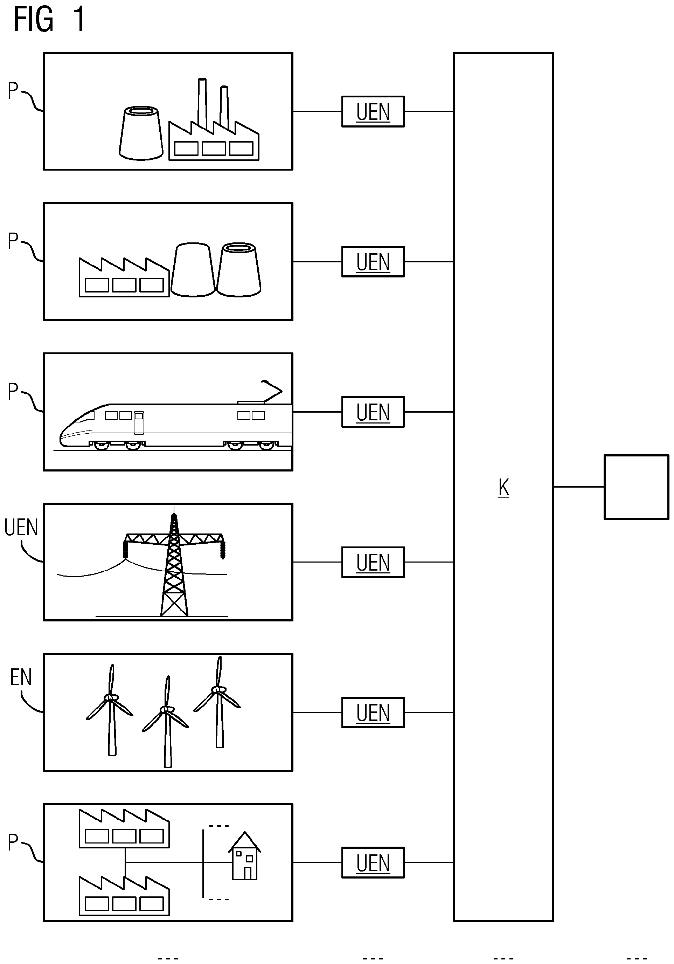

Figur 1 zeigt in einer schematischen Darstellung übersichtsartig ein Netzwerksystem zum Datenaustausch von Analyseergebnisdaten am Beispiel eines Energieversorgungssystems, das eine Vielzahl von dezentralen Produzenten (Datenproduzenten) P und einen oder mehrere Konsumenten K (Analyseergebniskonsumenten) umfasst sowie ein oder mehrere zwischengeschaltete Bussysteme oder Netzwerke.

Figur 1 zeigt unterschiedliche Datenproduzenten P, die als Energieverbraucher fungieren können, wie Produktionsanlagen, Stromnetze von öffentlichen Verkehrsmitteln, wie der Bahn, Übertragungsnetze UEN oder Einspeisenetze EN von regenerativen Energiequellen oder Haushalten. Bei dem Konsumenten K handelt es sich um einen Smart Grid Provider oder einen Energieversorger oder einen Provider anderer Netzdienste, einem ihm zugeordneten Netzwerkknoten, einen Netzwerkbetreiber oder um einen in Datenaustausch mit dem Netzbetreiber stehenden Knoten. Der Konsument ist Empfänger von Analyseergebnisdatensätzen AE, die vom Produzenten P bereitgestellt werden. Die Analyseergebnisdatensätze AE werden zur Regelung des Automatisierungsnetzes, insbesondere in Hinblick auf dessen Effizienz, verwertet.

Der Analyseergebnisdatensatz AE gibt Auskunft darüber, ob das Versorgungsnetz seiner Aufgabe zur Netzversorgung (z.B. zur elektrischen Energieverteilung) nachkommen kann. Dabei können Regeln zum Netzbetrieb - z.B. von Übertragungsnetzen - berücksichtigt werden, die auf Seite des Konsumenten K mit dem Analyseergebnisdatensatz AE verrechnet werden.

In einer bevorzugten Ausführungsform wird das Automatisierungsnetz von einem Gebäudeautomatisierungsnetzbetreiber betrieben, der unter anderem technische Planungsdaten (z.B. in Form von Vorhersagen für die Energieverbräuche) in Form eines Analyseergebnisdatensatzes AE benötigt. Je nach Typ des Konsumenten K ist dieser an unterschiedlichen Informationen interessiert, wie z.B. an einer Vorhersage des Energiebedarfs über den Tag in Viertelstundenintervallen über ein bestimmtes gesamtes Gebäude oder Teilen davon. Dazu werden die Energieverbräuche, die in Folge einer geplanten Nutzung von Räumen und den damit verbundenen Anlagen (wie z.B. Raumklimatisierung und Heizung) entstehen werden, durch Kombination mit in der Vergangenheit erhobenen Präsenzdaten über die typische Besetzung der jeweiligen Räume, auf dem Produzenten P ermittelt. Durch statistische Verfahren, wie Mittelung über verschiedene konkrete Präsenzdaten wird ausgeschlossen, dass sensible Daten (z.B. die Anzahl der Personen, die an einem bestimmten Treffen teilgenommen haben) abgeleitet werden können. Der Analyseergebnisdatensatz bzw. das Analyseergebnis AE besteht in diesem Fall aus der Vorhersage des Energiebedarfs. Aus dem vorhergesagten Energiebedarf kann der Energieversorger K seine Produktion planen bzw. ggf. Anreize zur zeitlichen Verschiebung von Verbräuchen geben. Dadurch kann die Auslastung und / oder die Qualität des Automatisierungsnetzes verbessert und damit Kosten reduziert werden. Ein wichtiger technischer Vorteil liegt darin, dass der Konsument K mit dem Analyseergebnis AE aufgrund der aktuell ermittelten Zustandsdaten und Messdaten MD das Automatisierungssystem für das Gebäude optimiert steuern und regeln kann. Die Messdaten MD fließen also indirekt oder mittelbar und der Analyseergebnisdatensatz AE unmittelbar in einen Regelungskreislauf seitens des Konsumenten K ein und werden dort umgesetzt, um Regelungsparameter zu bestimmen, mit denen das Automatisierungsnetz gesteuert und/oder geregelt wird.

Vorstehend wurde eine Ausführungsform der Erfindung anhand eines Automatisierungsnetzwerkes zur Gebäudeautomatisierung beschrieben. Die Erfindung kann jedoch auch auf andere Netzwerke übertragen werden, die ebenfalls sensible Daten zum Gegenstand haben, wie z.B. Produktionsplanungssysteme oder weitere verteilte eingebettete Systeme. Der Produzenten können die Produktionsanlage und Maschinen sein, die von einem zentralen Dienstleister oder Bereitsteller der Maschinen als Konsumenten fungiert. Bei technischen Produktionsanlagen, die in der Regel mit einer Vielzahl von dezentralen Produktionsgeräten und Werkzeugen ausgebildet sind, kann die hier vorgeschlagene Lösung ebenso eingesetzt werden, um auf einem Regelungsknoten, der in dem Netzwerk NW eingebunden ist, die Produktionsgeräte und Werkzeuge zentral zu regeln. Dabei fungiert ein zentraler Knoten als Konsument K, der zudem die Funktion der Auswertung übernimmt und dabei z.B. die Standzeiten der dezentral betriebenen Werkzeuge, deren Wartungszyklen, deren Fehlermeldungen (die als Messdaten-Produzent fungieren) auswertet und anhand der jeweils aktuell gemessenen Messdaten MD über zentral erzeugte Verarbeitungsbefehle regelt. Je nach Rollenzuweisung, muss sichergestellt sein, dass der Konsument nur die Analysedatensätze AE erhält, für die er auch zugriffsberechtigt ist. Dies wird erfindungsgemäß erreicht, indem der Konsument K nicht die Messdaten MD direkt erhält, sondern nur eine verarbeitete Form der Messdaten MD, die eine geringere Sicherheitsstufe aufweisen.

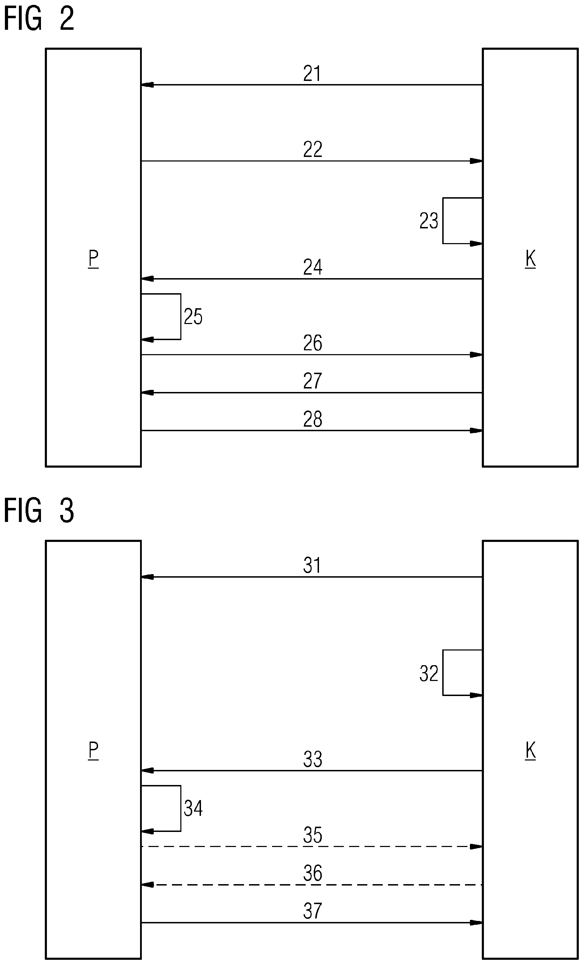

**Figur 2** zeigt ein Kommunikationsdiagramm einer Ausführungsform der Erfindung, bei der ein PULL-Prinzip für den Datenaustausch zur Anwendung kommt. Dies bedeutet, dass der Datenaustausch vom anfragenden Konsumenten K getriggert wird. Der Konsument K fragt nach vorkonfigurierbaren Kriterien (zeitabhängig, periodisch oder ereignisgesteuert) Messdaten MD oder Analysedaten an. Dazu sendet er eine Anfragenachricht in Schritt 21 an den Produzenten P, der daraufhin in Schritt 22 eine Antwortnachricht generiert und zurücksendet, die die Verfügbarkeit von Rohdaten und / oder Datenanalyseprimitiven zur Erzeugung von Verarbeitungsbefehlen anzeigt. Nach Empfang dieser Antwortnachricht erzeugt der Konsument K in Schritt 23 die Verarbeitungsbefehle. Dazu kann er vom Produzenten P bereitgestellte Analyseprimitive verwenden. Die Analyseprimitive werden nachstehend detaillierter erläutert. In Schritt 24 werden die erzeugten Verarbeitungsbefehle an den Produzenten P übermittelt. Dies erfolgt über ein Kommunikationsnetzwerk nach einem konfigurierbaren Protokoll. Fakultativ können noch weitere Datensätze, z.B. ein Authentifizierungsmerkmal des Konsumenten K, übertragen werden. Nach Empfang der Verarbeitungsbefehle überprüft der Produzent P in Schritt 25 die Zulässigkeit der empfangenen Verarbeitungsbefehle, insbesondere auf die Verträglichkeit mit den Zugriffsrechten des Konsumenten K, die ebenfalls am oder im Produzenten für ihn vorgehalten werden. In Schritt 26 wird ein Bestätigungssignal zur Zulässigkeit der Datenanalyse mit den Verarbeitungsbefehlen an den Konsumenten K gesendet. Daraufhin sendet der Konsument K ein Aktivierungssignal in Schritt 27 an den Produzenten P, um dort die Datenanalyse zu Ausführung zu bringen bzw. die Anfrage zu bestätigen. Dieser Signalaustausch 26, 27 hat den technischen Hintergrund, dass eine erhöhte Sicherheit und zudem eine zeitliche Flexibilität erreicht werden kann. Die Analyse wird nur dann und genau dann ausgeführt, wenn der Konsument K dies auch in Schritt 27 bestätigt. Daraufhin wird die Analyse und Auswertung der Messdaten MD mit den als zulässig überprüften Verarbeitungsbefehlen auf dem Produzenten P ausgeführt, so dass in Schritt 28 der Analyseergebnisdatensatz AE in einem vorkonfigurierbaren Format (periodisch oder kontinuierlich, in einer Paketnachricht gesammelt oder einzeln) an den Konsumenten K übertragen werden kann, ohne dass die der Analyse zugrundeliegenden sensiblen Daten die Domäne des Produzenten P verlassen.

Im Folgenden sollen die Analyseprimitive detaillierter erläutert werden. Dabei handelt es sich um Bausteine aus einem Analysebaukasten, die vom Produzenten P bereitgestellt und mit der Antwortnachricht zugestellt werden können. Die Analyseprimitive sind wiederum eine Auswahl aus einer Menge von grundsätzlich verfügbaren Verarbeitungsbausteinen, die jedoch vom Produzenten P auf Basis der der Analyse zugrundeliegenden Messdaten MD und/oder der jeweils ermittelten Sicherheitsstufe ermittelt werden. Des weiteren kann bei dem Erzeugen der Analyseprimitive auch ein Regelwerk zur Anwendung kommen, das spezifische Vorgaben des Produzenten P zur Vertraulichkeit der Messdaten MD abbildet oder das Vorgaben in Hinblick auf den anfragenden Konsumenten K in Bezug auf die angefragten Daten beim Produzenten P abbildet. Damit kann das Regelungssystem sehr spezifisch auf die jeweiligen Bedingungen und Gegebenheiten des Systems angepasst werden. Zur Erstellung der Datenanalyseprimitive kann ein Software-Werkzeug bereitgestellt werden. Das Werkzeug umfasst eine Beschreibung der Verknüpfung der jeweiligen Primitiven. Dabei kann die Beschreibung in einem plattform- und implementationsunabhängigen Format, z.B. in XML bereitgestellt werden. Mit der Verwendung der Analyseprimitive kann die technische Wirkung erzielt werden, dass der Konsument K auch nur die Verarbeitungsbefehle erzeugen kann, die für ihn und für die angefragten Mess- und Analysedaten in der ermittelten Vertraulichkeitsstufe überhaupt zulässig sind.

In **Figur 3** ist eine alternative Ausführungsform zu Figur 2 dargestellt. Einzelne Merkmale oder Schritte der Ausführungsform von Figur 3 und 2 können jedoch auch kombiniert werden. In Figur 3 ist ein PUSH-Betrieb näher beschrieben. Hier wird der Datenaustausch vom Produzenten P aus initiiert. Sobald dieser neue Messdaten MD gemessen hat oder sobald bestimmte Kriterien für die Messdatenerfassung MD erfüllt sind (die vom Produzenten P und/oder vom Konsumenten K definiert werden können), wird in Schritt 31 eine Mitteilung erzeugt und gesendet, dass Messdaten MD vorhanden sind und für eine Analyse ausgewertet werden können. In Schritt 32 erzeugt der Konsument K daraufhin die Verarbeitungsbefehle, die er in Schritt 33 an den Produzenten P übermittelt. Dieser überprüft in Schritt 34 die Zulässigkeit der empfangenen Verarbeitungsbefehle auf Verträglichkeit mit den Zugriffsrechten auf die sensiblen Messdaten MD (je nach ermittelter Sicherheitsstufe) und, falls er die Verarbeitungsbefehle als zulässig überprüft hat, stehen unterschiedliche Ausführungsformen der Erfindung zur Verfügung. Zum einen kann er direkt die Analyse der Messdaten MD mit den Verarbeitungsbefehlen ausführen, um dann in Schritt 37 das Ergebnis AE an den Konsumenten K zu übermitteln. Ebenso kann er das oben in Zusammenhang mit Figur 2 näher beschriebenen Verfahren anwenden, bei dem zunächst in Schritt 35 ein Bestätigungssignal übertragen wird, das in Schritt 36 mit einem Aktivierungssignal seitens des Konsumenten K beantwortet wird, um erst daraufhin die Analyseberechnung zu starten. Da die Signale 35 und 36 somit fakultativ sind, sind sie in Figur 3 gestrichelt dargestellt.

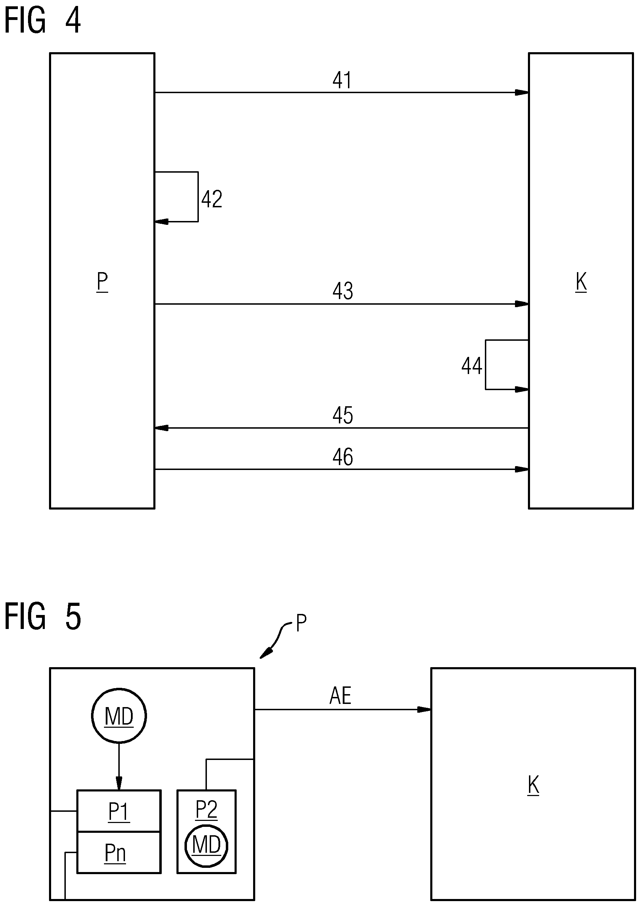

**Figur 4** zeigt eine weitere Ausführungsform der Erfindung. In Schritt 41 wird eine Mitteilung oder Nachricht vom Produzenten P versendet, die das Vorhandensein von neuen Messdaten MD signalisieren soll (PUSH-Betrieb). In Schritt 42 erfolgt unmittelbar auf dem Produzenten P das Erzeugen von Analyseprimitiven, die dann in Schritt 43 an den Konsumenten übermittelt werden. Die Nachrichten 41 und 43 können auch zusammengefasst werden. Nach Erhalt der Analyseprimitive auf dem Konsumenten K, erzeugt dieser in Schritt 44 die Verarbeitungsbefehle, die er für seine Auswertung benötigt. Dabei stehen ihm nur die zulässigen Primitive zur Verfügung. Die erzeugten Verarbeitungsbefehle werden dann in Schritt 45 an den Produzenten P übermittelt, um dort zur Ausführung zu kommen, so dass dieser das Analyseergebnis AE in Schritt 46 dem Konsumenten K bereitstellen kann.

Allen Ausführungsformen der Erfindung ist gemeinsam, dass die Verarbeitungsbefehle stets seitens des Konsumenten K erzeugt werden, möglicherweise unter Beanspruchung von Analyseprimitiven, die vom Produzenten bereitgestellt werden und, dass die Verarbeitung der Messdaten MD mit der Analyseberechnung stets seitens des Produzenten ausgeführt wird.

Figur 5 zeigt auf schematische Weise das der Erfindung zugrundeliegende Prinzip. Das Netzwerk NW, das zwischen Konsument K und Produzent P bereitgestellt wird, muss nicht identisch mit dem Automatisierungsnetzwerk sein. Es dient zur Übertragung von Nachrichten, Befehlen und Signalen (wie vorstehend beschrieben) und dem auf dem Produzenten P berechneten Analyseergebnis AE. Die Messdaten MD, die der Berechnung zugrunde liegen, verlassen die Domäne des Produzenten P nicht. Der Produzent P produziert Messdaten MD und der Konsument K konsumiert Analyseergebnisse AE und keine Messdaten MD. Aus den Analyseergebnisdatensätzen AE werden automatisch Regelungsparameter erzeugt, die dann zur Regelung des Netzwerkes angewendet werden. Üblicherweise sind mehrere Produzenten P zu einem Produzentennetzwerk zusammengeschlossen.

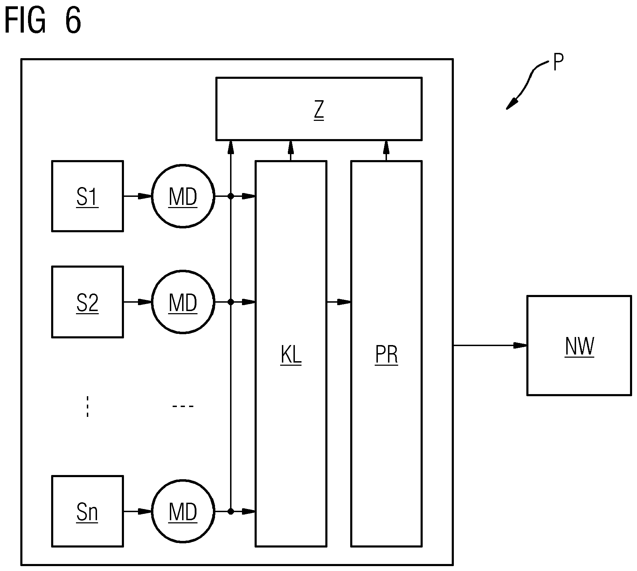

Der Aufbau eines Produzenten P ist genauer in Figur 6 gezeigt. Der Produzent P interagiert über das Netzwerk NW mit dem Konsumenten K. Der Produzent P umfasst eine Vielzahl von Sensoren S, die unterschiedliche Typen als Rohdaten liefern. Gemäß einer Ausführungsform werden diese Rohdaten zunächst einer Verarbeitungsstufe zugeführt, um aus den Rohdaten Messdaten MD zu erzeugen. Dazu werden Methoden der Fehlerbereinigung und der Qualitätssicherung angewendet.

Des Weiteren werden die Rohdaten in ein einheitliches Format und in eine einheitliche Genauigkeitsstufe zur weiteren Verarbeitung umgewandelt. Des Weiteren können die Rohdaten mit für ihre Verarbeitung erforderlichen Kontextinformationen (z.B. Zeitstempel, Ortskoordinaten, physikalische Einheit der Messgröße, Identität des Subsystems, aus dem die Daten stammen, etc.) ergänzt werden.

In einer einfacheren Ausführungsform werden die von den Sensoren S abgegriffenen Rohdaten unmittelbar als Messdaten MD verarbeitet. Sie werden einer Klassifikationsstufe KL zugeführt, die dazu bestimmt ist, die Messdaten in Sicherheitsstufen einzuteilen. Dabei können vorkonfigurierte Regeln zur Anwendung kommen (z.B. "Die Messdaten von Atomkraftwerken haben stets die höchste Sicherheitsstufe"). Weiterhin ist eine Prüfeinheit vorgesehen, die dazu bestimmt ist, die von dem Konsumenten K empfangenen Verarbeitungsbefehle auf Einhaltung der Zulässigkeitserfordernisse zu überprüfen. Die Prüfeinheit kann auch dazu ausgebildet sein, Analyseprimitive für die Messdaten MD in Abhängigkeit von deren Sicherheitsstufe zu generieren. Ein Prozessor Z dient zum Verarbeiten der Messdaten MD mittels der als zulässig geprüften Verarbeitungsbefehle. Vorzugsweise sind die Klassifikationseinheit KL, die Prüfeinheit PR und der Prozessor Z nicht als eigenständige separate Bauteile ausgebildet, sondern die Klassifikationseinheit KL und die Prüfeinheit PR sind in den Prozessor Z integriert.

Abschließend sei darauf hingewiesen, dass die Beschreibung der Erfindung und die Ausführungsbeispiele grundsätzlich nicht einschränkend in Hinblick auf eine bestimmte physikalische Realisierung der Erfindung zu verstehen sind. Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Der Schutzbereich der vorliegenden Erfindung ist durch die nachstehenden Ansprüche gegeben und wird durch die in der Beschreibung erläuterten oder den Figuren gezeigten Merkmale nicht beschränkt.

Für einen Fachmann ist es insbesondere offensichtlich, dass die Erfindung nicht nur für Automatisierungsnetze angewendet werden kann, sondern auch für andere dezentrale Netze oder Netzwerke, die über einen zentralen Knoten gesteuert und/oder geregelt werden. Des weiteren können die Bauteile des Produzenten P und/oder des Konsumenten K auf mehrere physikalische Produkte verteilt realisiert sein.

## Patentansprüche

1. Verfahren zur Regelung eines Automatisierungsnetzes seitens zumindest eines zentralen Konsumenten (K) auf Basis von vertraulichen Messdaten (MD), die auf einem oder auf einer Vielzahl von dezentralen Produzenten (P) erfasst werden, umfassend folgende Verfahrensschritte:
- Seitens des Produzenten (P): Messen oder Bereitstellen der Messdaten (MD) von einer Vielzahl von Sensoren (S) und Klassifizieren der Messdaten (MD) in Sicherheitsstufen
- Prüfen einer Zulässigkeit von konsumenten-generierten Verarbeitungsbefehlen in Abhängigkeit von der jeweils klassifizierten Sicherheitsstufe seitens des Produzenten (P) und im Fall einer positiven Prüfung:
- Seitens des Produzenten (P): Verarbeiten der Messdaten auf Basis der als zulässig geprüften Verarbeitungsbefehle zum Erzeugen eines Analyseergebnisdatensatzes (AE)
- Übermitteln des Analyseergebnisdatensatzes(AE) an den Konsumenten zur Regelung des Automatisierungsnetzes.

2. Verfahren nach Patentanspruch 1, wobei die vertraulichen Messdaten (MD) eine Umgebung des jeweiligen Produzenten (P) nicht verlassen.

3. Verfahren nach einem der vorangehenden Patentansprüche, bei dem der Analyseergebnisdatensatz (AE) eine geringere Sicherheitsstufe aufweist als die jeweils verarbeiteten Messdaten (MD).

4. Verfahren nach einem der vorangehenden Patentansprüche, bei dem Analyseprimitive erzeugt und auf Basis der jeweiligen Sicherheitsstufe der zugrundeliegenden Messdaten (MD)auf dem Konsumenten (K) zur Auswahl derart bereitgestellt werden, dass unterschiedliche Analyseprimitive verknüpft werden können, um die Verarbeitungsbefehle zu erzeugen.

5. Verfahren nach dem unmittelbar vorangehenden Patentanspruch, bei dem die Analyseprimitive fallspezifisch und für jede Analyse oder Verfügbarkeitsanfrage spezifisch erzeugt werden.

6. Verfahren nach einem der vorangehenden Patentansprüche, bei dem die Messdaten (MD) auf unterschiedlichen Produzenten (P) erfasst und auf einem dedizierten Produzentenknoten verarbeitet werden.

7. Verfahren nach einem der vorangehenden Patentansprüche, bei dem die Messdaten (MD) unterschiedliche Netzbetriebsmittel betreffen.

8. Verfahren nach einem der vorangehenden Patentansprüche, bei dem die Verarbeitungsbefehle zur Analyse der Messdaten (MD) seitens des Konsumenten (K) generiert und an den Produzenten (P) übermittelt werden.

9. Verfahren nach einem der vorangehenden Patentansprüche, bei dem das Verfahren eine Verfügbarkeitsanfrage umfasst:
- Übermitteln einer Verfügbarkeitsanfrage (21) für Analysedaten des Konsumenten (K) an den Produzenten (P) und/oder
- Übermitteln einer Verfügbarkeitsnachricht (22, 31, 41) von dem Produzenten (P) an den Konsumenten (K).

10. Verfahren nach einem der vorangehenden Patentansprüche, bei dem die Verarbeitung der Messdaten (MD) eine Anwendung von statistischen und mathematischen Operatoren umfasst, wie Mittelwertbildungen, Faltungen, Summationen, Histogramm-basierte Verfahren oder Korrelationen.

11. Verfahren nach einem der vorangehenden Patentansprüche, bei dem die Verarbeitungsbefehle zur Verarbeitung der Messdaten (MD) mit einem regelbasierten System erzeugt werden.

12. Netzwerksystem zur Regelung eines Automatisierungsnetzes seitens zumindest eines zentralen Konsumenten (K) auf Basis von vertraulichen Messdaten (MD), die auf einem oder auf einer Vielzahl von dezentralen Produzenten (P) erfasst werden, mit:
- Einer Vielzahl von Sensoren (S), die auf Seite des Produzenten (P) zur Bereitstellung von Messdaten (MD) bestimmt sind
- Einer Klassifikationseinheit (KL), die zum Klassifizieren der Messdaten (MD) in Sicherheitsstufen bestimmt ist
- Einer Prüfeinheit (PR), die zum Prüfen einer Zulässigkeit von konsumenten-generierten Verarbeitungsbefehlen in Abhängigkeit von der jeweils klassifizierten Sicherheitsstufe bestimmt ist
- Einem Prozessor (Z), der zum Verarbeiten der Messdaten (MD) auf Basis der als zulässig geprüften Verarbeitungsbefehle zum Erzeugen eines Analyseergebnisdatensatzes (AE) bestimmt ist und auf Seite des Produzenten (P) bereitgestellt wird
- Einem Netzwerk (NW) zum Übermitteln des Analyseergebnisdatensatzes (AE) an den Konsumenten (K), wobei der Konsument (K) dazu bestimmt ist, das Automatisierungsnetz auf Grundlage des übermittelten Analyseergebnisdatensatzes (AE) zu regeln.

13. Netzwerksystem nach dem vorangehenden Anspruch, bei dem die Klassifikationseinheit (KL) und/oder die Prüfeinheit (PR) auf Seite des Produzenten (P) oder des Konsumenten (K) bereitgestellt ist.

## Claims

1. Method for the regulation of an automation network by at least one central consumer (K) on the basis of confidential measurement data (MD) that are captured on one or on a multiplicity of local producers (P), comprising the following method steps:
- by the producer (P): measurement or provision of the measurement data (MD) from a multiplicity of sensors (S) and classification of the measurement data (MD) into security levels
- checking of an admissibility of consumer-generated processing commands on the basis of the respectively classified security level by the producer (P) and, in the event of a positive check:
- by the producer (P): processing of the measurement data on the basis of the processing commands checked as admissible for the purpose of producing an analysis result data record (AE)
- transmission of the analysis result data record (AE) to the consumer for the purpose of regulating the automation network.

2. Method according to Patent Claim 1, wherein the confidential measurement data (MD) do not leave an environment of the respective producer (P).

3. Method according to either of the preceding patent claims, in which the analysis result data record (AE) has a lower security level than the respectively processed measurement data (MD).

4. Method according to one of the preceding patent claims, in which analysis primitives are produced and, on the basis of the respective security level of the underlying measurement data (MD), are provided on the consumer (K) for selection such that different analysis primitives can be combined in order to produce the processing commands.

5. Method according to the immediately preceding patent claim, in which the analysis primitives are produced specifically on a case-specific basis and for each analysis or availability inquiry.

6. Method according to one of the preceding patent claims, in which the measurement data (MD) are captured on different producers (P) and processed on a dedicated producer node.

7. Method according to one of the preceding patent claims, in which the measurement data (MD) relate to different network resources.

8. Method according to one of the preceding patent claims, in which the processing commands for analyzing the measurement data (MD) are generated by the consumer (K) and transmitted to the producer (P).

9. Method according to one of the preceding patent claims, in which the method comprises an availability inquiry:
- transmission of an availability inquiry (21) for analysis data of the consumer (K) to the producer (P) and/or
- transmission of an availability message (22, 31, 41) from the producer (P) to the consumer (K).

10. Method according to one of the preceding patent claims, in which the processing of the measurement data (MD) comprises application of statistical and mathematical operators, such as averagings, convolutions, summations, histogram-based methods or correlations.

11. Method according to one of the preceding patent claims, in which the processing commands for processing the measurement data (MD) are produced using a rule-based system.

12. Network system for the regulation of an automation network by at least one central consumer (K) on the basis of confidential measurement data (MD) that are captured on one or on a multiplicity of local producers (P), having:
- a multiplicity of sensors (S) that are designated at the producer (P) end for the purpose of providing measurement data (MD)
- a classification unit (KL) that is designated for the purpose of classifying the measurement data (MD) into security levels
- a checking unit (PR) that is designated for the purpose of checking an admissibility of consumer-generated processing commands on the basis of the respectively classified security level
- a processor (Z) that is designated for the purpose of processing the measurement data (MD) on the basis of the processing commands checked as admissible for the purpose of producing an analysis result data record (AE) and is provided at the producer (P) end
- a network (NW) for transmitting the analysis result data record (AE) to the consumer (K), wherein the consumer (K) is designated to regulate the automation network on the basis of the transmitted analysis result data record (AE).

13. Network system according to the preceding claim, in which the classification unit (KL) and/or the checking unit (PR) is provided at the producer (P) or consumer (K) end.

## Revendications

1. Procédé de régulation d'un réseau d'automatisation du côté d'au moins un consommateur central (K) sur la base de données de mesure confidentielles (MD) qui sont saisies sur un ou sur une pluralité de producteurs décentralisés (P), comportant les étapes suivantes :
- du côté du producteur (P) : mesure ou fourniture des données de mesure (MD) par une pluralité de capteurs (S) et une classification des données de mesure (MD) en niveaux de sécurité ;
- contrôle d'une admissibilité d'ordres de traitement générés par des consommateurs en fonction du niveau de sécurité respectivement classé du côté du producteur (P) et en cas de contrôle positif :
- du côté du producteur (P) : traitement des données de mesure sur la base des ordres de traitement contrôlés comme autorisés pour générer un jeu de données de résultat d'analyse (AE) ;
- transmission du jeu de données de résultat d'analyse (AE) au consommateur pour la régulation du réseau d'automatisation.

2. Procédé selon la revendication 1, les données de mesure confidentielles (MD) ne sortant pas de l'environnement du producteur respectif (P).

3. Procédé selon l'une des revendications précédentes, dans lequel le jeu de données de résultat d'analyse (AE) présente un niveau de sécurité inférieur aux données de mesure respectivement traitées (MD).

4. Procédé selon l'une des revendications précédentes, dans lequel des primitives d'analyse sont générées et fournies sur la base du niveau de sécurité respectif des données de mesure sous-jacentes (MD) sur le consommateur (K) pour sélection de telle sorte que des primitives d'analyse différentes peuvent être associées pour générer les ordres de traitement.

5. Procédé selon la revendication précédant directement, dans lequel les primitives d'analyse sont générées de manière spécifique à chaque cas et spécifiquement pour chaque analyse ou requête de disponibilité.

6. Procédé selon l'une des revendications précédentes, dans lequel les données de mesure (MD) sont saisies sur différents producteurs (P) et traitées sur un noeud de producteur dédié.

7. Procédé selon l'une des revendications précédentes, dans lequel les données de mesure (MD) concernent différents équipements de réseau.

8. Procédé selon l'une des revendications précédentes, dans lequel les ordres de traitement sont générés pour l'analyse des données de mesure (MD) du côté du consommateur (K) et transmis au producteur (P).

9. Procédé selon l'une des revendications précédentes, dans lequel le procédé inclut une requête de disponibilité :
- transmission au producteur (P) d'une requête de disponibilité (21) pour des données d'analyse du consommateur (K)
et/ou
- transmission d'un message de disponibilité (22, 31, 41) du producteur (P) au consommateur (K).

10. Procédé selon l'une des revendications précédentes, dans lequel le traitement des données de mesure (MD) inclut une application d'opérateurs statistiques et mathématiques tels que formations de moyennes, circonvolutions, totalisations, procédé ou corrélations basés sur un histogramme.

11. Procédé selon l'une des revendications précédentes, dans lequel les ordres de traitement pour le traitement des données de mesure (MD) sont générés avec un système basé sur des règles.

12. Système de réseau pour la régulation d'un réseau d'automatisation du côté d'au moins un consommateur central (K) sur la base de données de mesure confidentielles (MD) qui sont saisies sur un ou sur une pluralité de producteurs décentralisés (P), comprenant :
- une pluralité de capteurs (S) qui sont, du côté du producteur (P), destinés à fournir des données de mesure (MD) ;
- une unité de classification (KL) qui est destinée à la classification des données de mesure (MD) en niveaux de sécurité ;
- une unité de contrôle (PR) qui est destinée au contrôle d'une admissibilité d'ordres de traitement générés par des consommateurs en fonction du niveau de sécurité respectivement classé ;
- un processeur (Z) qui est destiné au traitement des données de mesure (MD) sur la base des ordres de traitement contrôlés comme autorisés pour générer un jeu de données de résultat d'analyse (AE) et est mis à disposition du côté du producteur (P) ;
- un réseau (NW) pour transmettre le jeu de données de résultat d'analyse (AE) au consommateur (K), le consommateur (K) étant destiné à la régulation du réseau d'automatisation sur la base du jeu de données de résultat d'analyse transmis (AE).

13. Système de réseau selon la revendication précédente, dans lequel l'unité de classification (KL) et/ou l'unité de contrôle (PR) sont mises à disposition du côté du producteur (P) ou du consommateur (K).
